## Europäisches Patentamt

## European Patent Office

## Office européen des brevets

(19)

(11) Veröffentlichungsnummer: **0 054 890**
A1

(12) **EUROPÄISCHE PATENTANMELDUNG**

(21) Anmeldenummer: **81110460.3**

(22) Anmeldetag: **15.12.81**

(51) Int. Cl.³: **B 23 Q 7/14,** B 65 G 37/02,
B 65 G 15/06, B 65 G 19/02

(30) Priorität: **23.12.80 DE 3048777**

(71) Anmelder: **SORTIMAT Creuz & Co. GmbH, Postfach 250,
D-7057 Winnenden (Württ.) (DE)**

(43) Veröffentlichungstag der Anmeldung: **30.06.82
Patentblatt 82/26**

(72) Erfinder: **Amon, Werner, Leutenbacher Strasse 45,
D-7057 Leutenbach (DE)**

(74) Vertreter: **Patentanwälte Dr. Elisabeth Jung Dr. Jürgen
Schirdewahn, Dr. Gerhard Schmitt-Nilson Dipl.-Ing.
Peter Hirsch Clemensstrasse 30 Postfach 40 14 68,
D-8000 München 40 (DE)**

(84) Benannte Vertragsstaaten: **AT BE CH DE FR GB IT LI NL
SE**

(54) **Werkstückförderer, insbesondere für Kleinteile.**

(57) Die Erfindung bezieht sich auf einen Werkstückförderer zur Kopplung an mindestens eine taktabhängig betreibbare, mit dem Werkstück zusammenwirkende Station, mit einem als Zahnriemen ausgebildeten antreibbaren Endlosriemen, der hochkant gestellt um vertikale Umlenkachsen geführt ist und dessen Oberseite eine sich horizontal erstreckende Förderbahn für eine Vielzahl von Werkstücken bildet. Nach der Erfindung ist vorgesehen, dass der Endlosriemen kontinuierlich antreibbar ist, dass die Oberseite des Endlosriemens als Gleitfläche für die Werkstücke oder lose auf ihr aufgesetzte Werkstückträger (54) derart ausgebildet ist, dass die Werkstücke oder Werkstückträger in Richtung der Förderbahn (50) relativ zum Endlosriemen verschiebbar sind, und dass im Einwirkungsbereich einer Station eine taktabhängig öffenbare Sperre (102) für den Weitertransport der an der Sperre auflaufenden Werkstücke oder Werkstückträger angeordnet ist.

Q 857 M1

---

" Werkstückförderer, insbesondere für Kleinteile "

---

Die Erfindung bezieht sich auf einen Werkstückförderer, insbesondere für Kleinteile.

In der modernen Montagetechnik werden taktabhängig bewegte
Werkstückförderer verwendet, die pro Takt um eine Station
einer längs des Förderers im Taktschritt verteilten Stationsreihe vorrücken.

Es ist bereits ein als als Längstransfermaschine ausgebildeter
Werkstückförderer zur Kopplung an mindestens eine taktabhängig
betreibbare, mit dem Werkstück zusammenwirkende Station bekannt (US-PS 2 823 789), der einen als ein- oder beidseitiger
Zahnriemen ausgebildeten Endlosriemen aus elastomerem Material
aufweist, der im Takt antreibbar ist und hochkant gestellt
um vertikale Umlenkachsen geführt ist, wobei in der Oberseite
des Zahnriemens Werkstückaufnahmen in äquidistanten Abständen
ausgebildet sind, die längs einer geschlossenen, sich horizontal erstreckenden Förderbahn geführt werden können. Dieser
bekannte Werkstückförderer ist insbesondere zur Aufnahme von
Kleinteilen geeignet. Die Förderbahn kann aufgrund der Flexibilität des Zahnriemens längs eines frei wählbaren Weges
geführt werden. Die Werkstückaufnahmen des Zahnriemens müssen
jedoch mit geringen Toleranzen an die Dimensionen des geförderten Werkstücks angepaßt sein. Die auf Lücke gegenüber
den Zähnen des Zahnriemens angeordneten Werkstückaufnahmen
sind schmaler als die nicht gezahnte Mittelzone des Zahnriemens bemessen. Ferner kommt der Werkstückförderer außer Takt, wenn sich der Endlosförderer dehnt und sich dabei auch der relative Abstand der Werkstückaufnahmen am Zahnriemen ändert.

Der Erfindung liegt zunächst die Aufgabe zugrunde, auf zuverlässigere Weise als bei dem genannten bekannten Werkstückförderer eine geschlossene horizontale Förderbahn für die Werkstücke bzw. Werkstückaufnahmen erreichen zu können und dabei mit demselben Werkstückförderer eine größere Mannigfaltigkeit unterschiedlich geformter Werkstücke aufnehmen zu können, einschließlich solcher, deren auf dem Föderer aufgenommene Basis der Dicke des Zahnriemens einschließlich der Zähne entspricht.

Diese Aufgabe wird nach der Erfindung /bei einem Werkstückförderer mit den Gattungsmerkmalen von Anspruch 1 gemäß dem Kennzeichen von Anspruch 1 gelöst. Bei dem Werkstückförderer nach der Erfindung haben Materialdehnungen des Zahnriemens keinen Einfluß auf die taktmäßige Zufuhr der Werkstücke zur jeweiligen Arbeitsstation, solange man mit bekannten Mitteln, z.B. einer mit Federkraft quer zum Förderweg vorgespannten Führungsrolle für den Endlosriemen, auch bei Materialdehnung, einen kontinuierlichen Antrieb des Endlosriemens sicherstellt und dabei den Förderweg wenigstens in kritischen Bereichen, wie an einer Arbeitsstation nicht oder nicht wesentlich verändert. Aus Stabilitätsgründen kann man dabei die Breite des Endlosbandes nicht nur größer, sondern groß gegenüber dessen Dicke wählen. Die Breite des Förderweges wird dabei unabhängig von der Breite des Endlosbandes ausschließlich durch dessen obere Stirnfläche einschließlich der ein- oder doppelseitig vorgesehenen Zahnung vorgegeben. Man kann dabei nicht nur Werkstücke fördern, deren Basis der Breite der oberen Stirnfläche des Zahnriemens einschließlich der Zahnung entspricht oder diese sogar noch überschreitet, sondern mittels an die Dimensionen der Förderbahn angepaßter Werkstückträger alternativ auch noch eine Vielzahl nur auf den jeweiligen Werkstückträger, nicht aber auf die Förderbahn selbst passende Werkstücke aufnehmen.

Zwar kann man bei dem erfindungsgemäßen Werkstückförderer auch nur Teilabschnitte des Endlosriemens als offene Förderbahn benutzen. Die Vorteile der Erfindung kommen jedoch voll zur Geltung, wenn die Förderbahn geschlossen ist. In jedem Fall kommt man nur mit einem einzigen Endlosriemen aus. Ferner ist im Rahmen der dem Endlosriemen zuzumutenden Umlenkkrümmungen jede beliebige Konfiguration der Förderbahn möglich, wobei vorzugsweise eine Bahn zwischen zwei Halbkreisen und linearen Verbindungsstücken oder auch eine Zickzackbahn, beispielsweise mäanderförmig,neben anderen möglichen Formen, wie Dreieckform, Parallelogrammform, Trapezform, Rechteckform usw., je nach den speziellen Anforderungen am Arbeitsplatz in Frage kommt.

Der erfindungsgemäße Werkstückförderer läßt sich ferner miniaturisieren, was insbesondere bei der Förderung von Kleinteilen längs einer Vielzahl von Stationen sehr wesentlich ist.

Der Raumbedarf kann besonders klein gehalten werden, weil der Endlosriemen ein Zahnriemen, insbesondere ein doppelseitig gezahnter Zahnriemen, ist. Denn derartige Zahnriemen haben einen etwa um den Faktor 2 im Verhältnis zu normalen Flachbändern kleineren Krümmungsradius, so daß man Vor- und Rücklauf näher aneinanderrücken kann und ferner auch in der Gestaltung von von diesem einfachen Modell abweichenden komplizierteren Förderbandkonfigurationen recht frei ist. Beispielsweise kann man für Kleinteile einen miniaturisierten Werkstückförderer, bei dem ein doppeltseitiger Zahnriemen an zwei Umlenkrollen jeweils um 180° umgelenkt wird, so gestalten, daß die Gesamtbreite in einem Bereich unter 20 cm, beispielsweise bei 15 bis 17 cm, liegt. Die Länge kann man dabei frei wählen. Man kommt jedoch bereits zu einer sehr großen Anzahl von Stationen bei einer Gesamtlänge von 50 bis 70 cm zwischen den beiden Scheitelpunkten der Förderbahn. Derartige miniaturisierte Werkstückförderer können beispielsweise zum Transport von Federn, Schrauben, Muttern und anderen vergleichbaren Kleinteilen Verwendung finden.

Vorzugsweise sind auf dem Endlosriemen Werkstückträger lose aufgesetzt. In neuartiger Weise wird dabei eine kontinuierlich angetriebene und geschlossene horizontale Förderbahn ermöglicht, auf der die Werkstückträger an der jeweiligen Station vor der zugeordneten Sperre längs einer mehrere oder eine Vielzahl von Werkstückträgern aufnehmenden Pufferstrecke auflaufen, wobei eine Werkstückentnahme jeweils vor der Sperre erfolgen kann und bei im Takt sich öffnen der Sperre jeweils ein leerer Werkstückträger selbsttätig wieder rückläuft. Dabei kann man an der betreffenden Station entweder auf das Werkstück an einem einzigen Werkstückträger einwirken und jeweils an der Sperre nur einen Werkstückträger nach Entnahme des Werkstücks durchlassen, oder aber auch auf mehrere in der Pufferstrecke hintereinander anstehende Werkstückträger zugleich einwirken und die entsprechende Zahl von Werkstückträgern dann vor Öffnen der Sperre gemeinsam wieder in den Rücklauf schicken. Dies gilt nicht nur für Montageautomaten, sondern auch für das Werkstück bearbeitende Fertigungsautomaten, oder Mischformen davon.

In der modernen Montagetechnik werden bisher meist verschiedene taktgebundene Zuführsysteme verwendet, z. B. Sortierkessel in Verbindung mit Wurfvibratoren oder Sortierkessel in Verbindung mit Zuführflachbänder der beschriebenen doppelten Anordnung mit Vorlauf und Rücklauf und Überführungsschieber. Diese und ähnliche Systeme werden aber nur bei Teilen verwendet, die sich in Sortierkesseln automatisch zuführen und sortieren lassen.

Teile, die sich nicht automatisch zuführen lassen, werden von
einer Bedienungsperson direkt in die Werkstückaufnahme am
Schaltteller einer Rundtaktmaschine oder am Führungsglied einer
Längstransfermaschine eingelegt. Dies geschieht im monotonen
Takt der Montagemaschine. Man erhält dabei nicht mehr zeitgemäße taktgebundene Arbeitsplätze. Die Arbeitsplätze sind mit
großer Unfallgefahr verbunden, weil in unmittelbarer Nähe von
anderen Arbeitsstationen eingelegt werden muß, um nicht zu
große Länge des Transportweges zu verschenken, und dadurch
die Montagemaschine übermäßig groß und teuer zu machen. Die
Einlegezeiten sind dabei sehr kurz, weil nur während des Stillstand des Schalttellers oder Führungsgliedes eingelegt werden
kann. Auch die Arbeitsplatzgestaltung zeigt schlechte  ergonomische Verhältnisse, da beispielsweise nicht genügend Knieraum für eine Bedienungsperson freibleibt.
An
Rundtakt- oder Längstransfermaschinen müssen wegen der Zugänglichkeit durch eine Bedienungsperson meist mehrere Arbeitsstationen weggelassen werden, um der Bedienungsperson
ein besseres Einlegen der Teile zu ermöglichen. Dadurch wird
entweder der Anwendungsbereich der Maschine beschränkt oder
diese wird größer und teuerer.

Der erfindungsgemäße Werkstückförderer vermeidet alle diese
Nachteile. Dabei ist nur die Verwendung eines einzigen kostengünstigen Zahnriemens erforderlich, welcher den gesamten
Förderweg beschreibt.

Speziell ist ein erfindungsgemäßer Werkstückförderer dieser
Art für das Zuführen von nicht sortierbaren Teilen entwickelt.
Bei dem erfindungsgemäßen Werkstückförderer ist es beispielsweise wegen der geringen Kosten eines Endlosriemens und der

- 6 -

möglichen Miniaturisierbarkeit möglich, einen breiten und ergonomisch günstig gestalteten Arbeitsplatz für eine Bedienungsperson auszusparen, wobei die Bedienungsperson ohne Behinderung
durch einen Takt kontinuierlich einlegt und außerdem hinreichenden Sicherheitsabstand zur nächsten Arbeitsstation haben
kann. Der einzige Endlosriemen läuft außerdem sehr leise.

Die die Förderbahn bildende obere Stirnfläche des Endlosriemens
kann glatt und eben sein. Dabei können und sollen vorzugsweise
die Werkstückträger, gegebenenfalls auch die Werkstücke selbst,
seitlich über den Endlosriemen überstehen. Zweckmäßig sieht man
dann ortsfeste Seitenführungen für die Werkstückträger vor.
Entsprechend kann man eine ortsfeste Höhenführung für die Werkstückträger vorsehen. Diese hält vorzugsweise die Werkstückträger unter Freilassung ihrer Werkstückaufnahmen wenigstens über einen Teilbereich der Förderbahn unverlierbar am
Endlosriemen. Dadurch kann man sicherstellen, daß beispielsweise einer Bedienungsperson nur die Werkstückaufnahmen an
einem Werkstückträger zugänglich sind und dadurch auch die Unfallgefahr weiter vermindert wird. Außerdem kommen die Werkstückträger selbsttätig nach Umlauf der Förderbahn wieder für
den nächsten Umlauf an, ohne daß Einsetz- und Absetzmanöver erforderlich sind.

Wenn die Werkstücke oder Werkstückträger eine größere Breite
als die  die Förderbahn bildende Seite des Endlosriemens haben,
was zur Verbreiterung der Nutzbreite des Endlosriemens vorteilhaft ist, kann man ein Abkippen der Werkstückträger durch unter die überstehenden Ränder der Werkstückträger knapp untergreifende ortsfeste Kippsicherungsflächen verhindern.

Vorzugsweise weisen die Werkstückträger einen zylindrischen
Sockelteil und/oder einen zentralen, mit einer Werkstückabnahme an mindestens einer Station zusammenwirkenden Zentrierdorn und/oder eine mit dem Werkstück zusammenwirkende Zentrierfläche auf, die vorzugsweise an einem Sockel des Zentrierdorns
ausgebildet ist.

Wegen der nachgiebigen flexiblen Struktur eines Riemens sind Sicherheitsführungen und gegebenenfalls Zentriereinrichtungen zweckmäßig.

Wenn man in der bereits erwähnten Weise den Endlosriemen unterhalb seiner die Förderbahn bildenden oberen Stirnseite gegen axiale Auswanderung sichert, können Werkstückträger ständig auf dem Endlosband verbleiben. Dies bietet ohne weiteres einsichtige Vorteile, denen jedoch der Nachteil gegenüber steht, daß der Förderriemen an der Arbeitsstation wegen seiner Nachgiebigkeit keine starre Unterstützung für den Werkstückträger und damit für das Werkstück bieten kann, was die Arbeitsfunktion an der Station beeinträchtigen kann. Auch sind Endlosriemen mit Längsführungsnut kostenungünstigere Sonderausführungen, so daß die Verwendung einfacher handelsüblicher Endlosriemen bzw. Endloszahnriemen bevorzugt ist. Hierfür kann man den an der Arbeitsstation vor der Sperre bereitstehenden Werkstückträger durch eine mit der Umlenkrolle mitdrehende Bordscheibe starr unterstützen. Die Bordscheibe kann dabei leicht als Höhenführung für den Endlosriemen dienen. Entsprechende Bordscheiben können dann auch als Tiefenführung für den Endlosriemen an dieser Station und auch an allen anderen Umlenk- und Führungsrollen vorgesehen sein. Dies ermöglicht die Verwendung von Endlosriemen ohne gesonderte Führungsnuten.

Es ist zwar denkbar, eine Überführungsrampe vom Endlosriemen auf die Bordscheibe an dieser selbst auszubilden. Wenn die untere Einlaufkante der Überführungsrampe jedoch zu spitzwinklig ausgebildet ist, besteht Verletzungsgefahr nicht nur für Bedienungspersonen, sondern auch für den Endlosriemen selbst. Bei weniger spitzwinkliger Ausbildung kann es zu unerwünschten örtlichen Verlagerungen oder gar zum Abkippen

- 8 -

des Werkstückträgers kommen. Bevorzugt ist daher eine ortsfeste Ausbildung der Übergaberampe neben der Bordscheibe.

Zur störungsfreien Bereitstellung einer Werkstückabnahme,
oder einer bestimmten Zahl derselben, an einer Arbeitsstation
vor der Sperre, wird vorzugsweise der Sperre eine im Gegentakt zu ihr betätigbare Nachrücksperre zugeordnet. Da man die
Werkstückträger bei besonders toleranzgenauer Führung auf den
Endlosriemen und sehr exakter Sperrenausbildung genau in Fluchtung mit den Wirkungslinien der an der Station wirksam werdenden Elemente anordnen kann, ist eine Zwangszentrierung des Werkstückträgers an seiner Bereitstellungsstelle zweckmäßig. Wenn
das Wirkelement eine Werkstückabnahme ist, ist dieses zweckmäßig als zentrierte Greifzange ausgebildet, wobei vorteilhaft als Zentrierungselement für den Werkstückträger ein
zwischen ihren Greifbacken höhenbeweglicher Zentrierstößel
dient. Während ein Zentrierstößel meist in eine zentrale Ausnehmung des Werkstücks einfährt und in dieser Ausnehmung an
einem Zentriermittel am Werkstückträger, vorzugsweise dem
früher erwähnten Zentrierdorn, einwirkt, kann alternativ auch
eine das Werkstück umgreifende Zentrierhülse, oder ein anderes Zentrierelement, vorgesehen sein.

Der erfindungsgemäße Endlosriemen ermöglicht es, lineare
Förderwegstrecken beliebiger Länge zwischen den Umlenkachsen
vorzusehen. Bei größerer Länge derartiger Förderwegstrecken
sind zweckmäßig Stützmaßnahmen für den Endlosriemen vorgesehen.

Endlosriemen können langsam die Spannung verlieren, so daß es
zweckmäßig ist, eine Nachspanneinrichtung vorzusehen. Hierbei
sollte nach Möglichkeit die Lage der Arbeitsstationen von ortsfesten Führungen und Lagerungen so wenig wie möglich verstellt werden. Man sollte insbesondere gewährleisten, daß nur eine
Längenänderung gerader Förderbahnabschnitte, nicht jedoch eine
seitliche Verlagerung derselben erforderlich wird. Wenn man
die betreffende Umlenkwelle in Richtung des längenveränderlichen Abschnittes verschiebt, braucht man also allenfalls sicherzustellen, daß überlappende Führungsmittel weiter auseinandergezogen werden oder auf andere Weise die Führung in unveränderter Richtung gewährleistet bleibt.

Bei dem kontinuierlichen Antrieb des Endlosriemens kommen insbesondere folgende Anwendungsfälle in Frage:

1. Als taktunabhängiges Zuführsystem für Teile, die nicht
   automatisch zu sortieren und zu fördern sind, z. B. für
   die Zuführung von fünferlei verschiedenen konischen Druckfedern mit offenen Enden. Derartige Druckfedern mit offenen
   Enden sind nicht automatisch zuführbar, weil sich die
   Federenden ineinanderdrehen und verhaken. Das Auflegen
   wird von einer Bedienungsperson durchgeführt, wobei die
   Übergabe zu einem nachfolgenden Automaten, z. B. zur Werkstückaufnahme am Schaltteller einer Schalttellermaschine,
   automatisch erfolgt. Man kann dabei den Betrieb beispielsweise so einrichten, daß in der Pufferstrecke vor der
   Sperre eine Vielzahl, beispielsweise fünfzehn, Werkstückträger vor der Übergabe bereitstehen. Eine derartige
   Vielzahl hintereinander aufgereihter Werkstückträger übt
   auch einen ausreichenden Schub aus, um Werkstückträger
   über eine ortsfeste Übergaberampe auf eine Bordscheibe
   schieben zu können. An dem der Sperre abgewandten Ende
   der Pufferstrecke einer Vielzahl von Werkstückträgern, z. B.
   von fünfzehn Werkstückträgern, kann eine Bestückungskontrolle angebracht sein, die bei einem manuell nicht eingelegten Teil ein optisches oder akustisches Signal auslöst und der
Bedienungsperson eine Nachbestückung ermöglicht. Dadurch
wird die Fehlerzeitquote reduziert.

Bei auswechselbaren oder nur bedarfsweise eingesetzten Wahlstationen, etwa zur Umstellung auf verschiedenartige
Werkstücke, ergibt sich ein wesentlicher Vorteil auch daraus,
daß die Werkstückträger schnell auswechselbar sind. Bei
gleichbleibender Werkstückart sind sie hingegen zweckmäßig
unverlierbar geführt, so daß man zur Auswechslung bestimmte
Auswechslungsbereiche vorsehen kann, die normalerweise sogar
geschlossen sein können.

Die Länge der Pufferstrecke wird jeweils von der Anzahl der
Werkstückträger bestimmt.

2. Als Abwandlung von Ziffer 1 dahingehend,
   daß die Bestückung nicht durch eine Bedienungsperson, sondern direkt von einem Fertigungsautomaten erfolgt, im obigen Beispiel z. B. einem Federwickelautomaten.
   Der Fertigungsautomat kann sich dabei in größerer Entfernung
   von den sonstigen Arbeitsstationen befinden, da der Transportweg auf dem Endlosriemen variabel gestaltet werden kann, z. B.
   um 90° versetzt.

3. Als Verkettungssystem zwischen zwei Fertigungs- oder Montageautomaten, gegebenenfalls mit Pufferstrecken zur Fehlteilselektierung oder mit Sichtkontrollstationen.

4. Als selbständiges kompaktes Arbeitssystem mit oder ohne
   Handarbeitsplatz.

   Hierbei können die Arbeitsstationen um die Förderbahn herum angelegt und gegebenenfalls über eine zentrale Steuerwelle zusammen mit dem Endlosriemen angetrieben werden.

   In diesem Fall kann an einem Handarbeitsplatz taktunabhängig
   eingelegt werden, wenn die Pufferstrecke genügend groß ist.

Die Werkstückträger können im Bereich der Arbeitsstationen jeweils mit der zugeordneten Sperre angehalten werden, bis der jeweilige Fertigungs- oder Montagevorgang abgeschlossen ist. Danach wird der bestückte Werkstückträger wieder freigegeben und durch den Endlosriemen zur nächsten Arbeitsstation geleitet.

Die Erfindung wird im folgenden anhand schematischer Zeichnungen an mehreren Ausführungsbeispielen noch näher erläutert. Es zeigen:

Fig. 1a mit Fig. 1b
   eine Draufsicht auf die beiden Endstücke eines erfindungsgemäßen Werkstückförderers mit zwei den Förderriemen jeweils um 180° umlenkenden Riemenscheiben und dazwischenliegenden parallelen geraden Abschnitten der Förderbahn;

Fig. 2 einen vertikalen Längsschnitt durch den in Fig. 1a dargestellten Teilabschnitt desselben Werkstückförderers;

Fig. 3 einen vertikalen Schrägschnitt nach der Linie A-B in Fig. 1a;

Fig. 4 einen vertikalen Querschnitt durch denselben Werkstückförderer in dem in den Fig. 1a und 1b nicht dargestellten Bereich in Höhe des der Anordnung von Fig. 1b zuwandten Endes des Antriebsmotors des Werkstückförderers mit Blickrichtung auf die in Fig. 1a dargestellte Anordnung;

Fig. 4a einen Teilquerschnitt durch eine Abstützung und Führung für den Endlosriemen;

Fig. 5 einen vertikalen Querschnitt durch eine Werkstückabnahme mit zur Werkstückaufnahme einer nachfolgenden Station, insbesondere einer Rundtellermaschine, schwenkbarer, zentrierter Greifzange;

0054890

Fig. 6 bis 8 eine Darstellung von vier verschiedenen (in Fig. 6
  zwei alternativen) Anordnungsmöglichkeiten eines
  kontinuierlich angetriebenen Endlosriemens bei gleichem geschlossenem Förderweg desselben;   und

Fig. 9  ein Beispiel eines alternativen Förderweges.

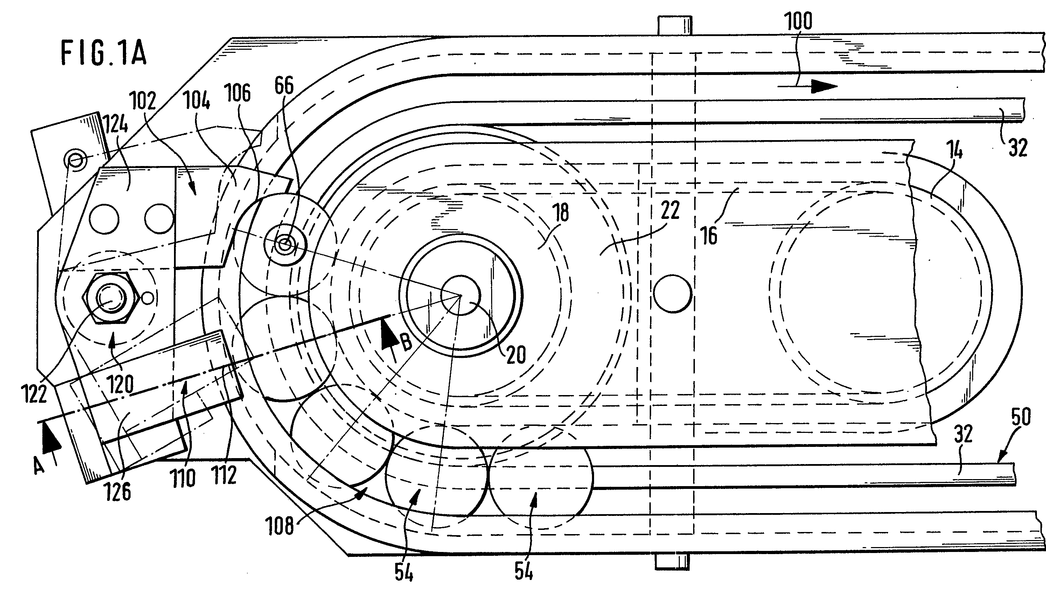

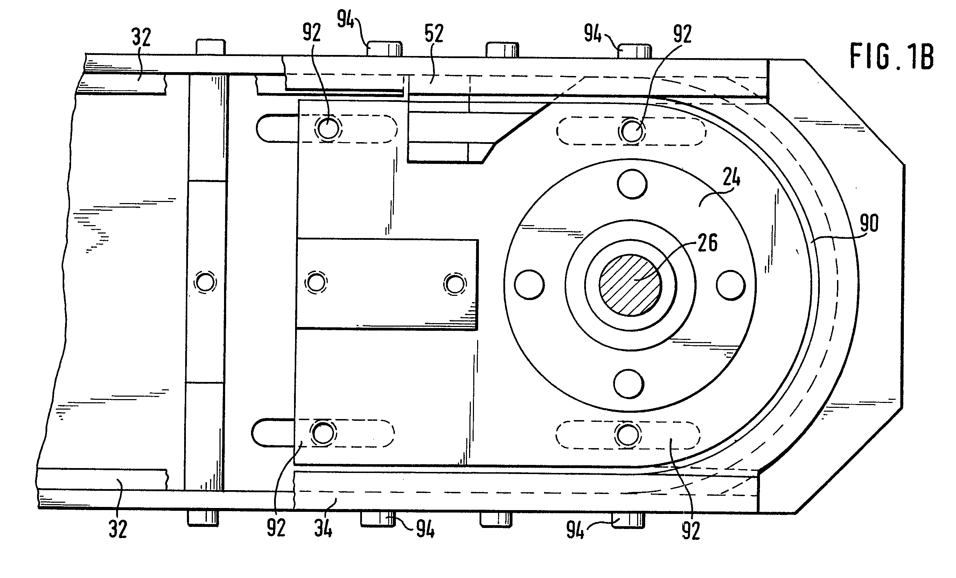

Der in den Fig. 1 bis 5 dargestellte Werkstückförderer weist
einen ortsfesten Maschinentisch mit einer Tischplatte 2 auf.
Unter deren mittlerem Bereich, aber etwas zu einem Ende der
Tischplatte 2 versetzt, ist ein stufenlos regelbarer Elektromotor 4 über einen Klemmfuß 6 und eine verstellbare Motorplatte 8 durch Bolzen 10  befestigt. Im Klemmfuß 6 ist ein nicht
dargestelltes Winkelgetriebe angeordnet, beispielsweise ein
Kegelritzelpaar, welches in einem vertikal über die Tischplatte 2 hinausragenden Wellenstummel 12 mündet. An diesem
ist ein erstes Kettenrad 14 befestigt, das über eine Antriebskette 16 ein zweites Kettenrad 18 antreibt. Dieses ist auf
einer zum Wellenstummel 12 parallelen und zum benachbarten
Ende der Tischplatte 2 versetzten Antriebswelle 20 befestigt,
die axial unverschieblich im Maschinengestell in nicht gezeigten Kugellagern gelagert ist und mit ihrem oberen Ende
über die horizontale Umlaufebene der Antriebskette 16 hervorsteht. An diesem oben hervorstehenden Ende der Antriebswelle 20 ist eine angetriebene erste Zahnriemenscheibe 22
befestigt.

Während die erste Zahnriemenscheibe 22 im Bereich des einen
Endes der Tischplatte 2 angeordnet ist, ist im Bereich des
anderen Endes der Tischplatte 2 in derselben horizontalen
Ebene wie die erste Zahnriemenscheibe 22 eine zweite Zahnriemenscheibe (nicht bezeichnet)  unter einer oberen Bordscheibe 24 an einer vertikalen, in Kugellagern frei mitlaufenden Welle 26 befestigt.

Die obere Bordscheibe 24 läuft mit der zweiten Zahnriemenscheibe
in horizontaler Ebene mit. Ebenso ist über der ersten Zahnriemenscheibe 22 eine mitangetriebene obere Bordscheibe 28
vorgesehen.

Mit vertikalem Abstand unter den oberen Bordscheiben 24 und
28 sind jeweils untere Bordscheiben 30 vorgesehen, die ebenfalls mit ihrer zugehörigen Zahnriemenscheibe mitlaufen und
zwischen sich einen axialen Ringspalt freilassen, in welchem
ein doppelseitig verzahnter Zahnriemen 32 auf den beiden
Zahnriemenscheiben kontinuierlich umlaufen kann. Beide Zahnriemenscheiben sind dabei 180°-Umlenkrollen, zwischen denen
der Zahnriemen längs zweier paralleler gegenläufiger Trums
horizontal verläuft. Dabei greift die Innenverzahnung des
Zahnriemens zwischen den entsprechenden Zähnen der Riemenscheiben ein, während die Außenverzahnung des Zahnriemens
die obere Aufstandsfläche auf dem Zahnriemen vergrößert,
ohne dabei die Flexibilität des Zahnriemens zu beeinträchtigen.

Die zweite Zahnriemenscheibe ist der ersten Zahnriemenscheibe
22 gleich. Je nach der Anordnung der von den beiden Wellen 20
und 26 bestimmten vertikalen Umlenkachsen können Zahnriemen
beliebiger Länge eingesetzt werden. Dabei kann man handelsübliche doppelverzahnte Zahnriemen ohne Sonderausrüstung
für Längsführungszwecke verwenden, da der Zahnriemen zwischen
den oberen Bordscheiben 24 bzw. 28 und den unteren Bordscheiben 30 gegen axiale Verschiebung gesichert gehalten ist.

Bei mechanisch gesteuerten Montage- oder Fertigungsautomaten
kann der Antrieb der angetriebenen ersten Zahnriemenscheibe 22
auch statt durch den Elektromotor 4 über die zentrale Steuerwelle des Automaten erfolgen.

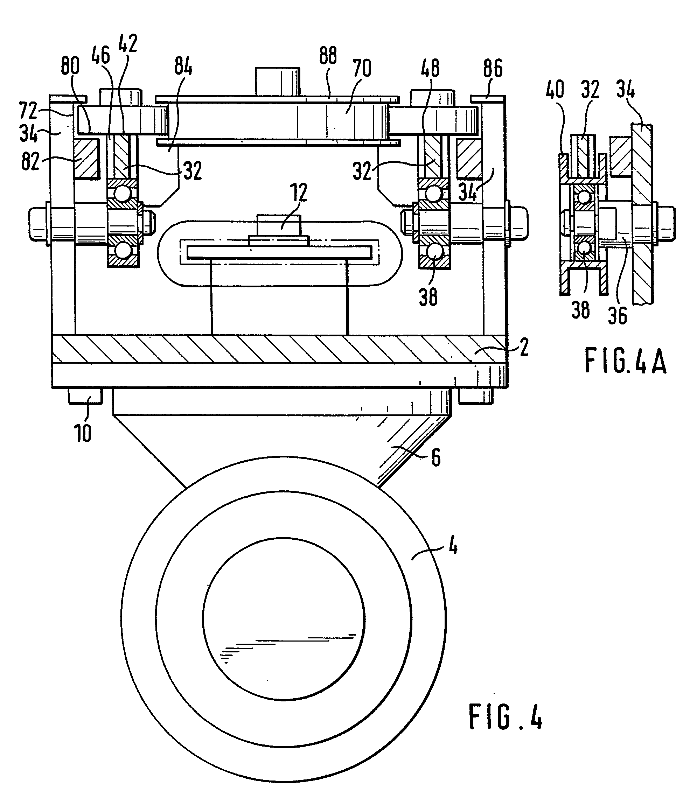

An den Längsseiten der Tischplatte 2 ragen Seitenwände 34
(Fig. 4a) nach oben, die auf seitlich nach innen ragenden Achsstummeln 36 auf je einem Kugellager 38 eine den Zahnriemen
unterstützende und seitlich führende Führungsrolle 40 tragen.
Es sind pro Trum je nach dem Abstand der beiden vertikalen
Umlenkachsen für den Zahnriemen mindestens eine Führungsrolle 40 oder mehrere derselben vorgesehen. Bedarfsweise
kann man auch noch seitliche entsprechende Führungs- und
Stützrollen vorsehen, beispielsweise für Spannzwecke. Diese
können beispielsweise lose mitlaufende Zahnriemenräder aufweisen.

Wie man insbesondere aus den Fig. 4 mit 4a ersehen kann,
haben die Zahnriemen 32 in diesem Beispiel eine etwa doppelt
so große Breite wie Dicke und laufen dementsprechend hochkant um die Zahnriemenscheiben um. Dabei weist der Zahnriemen 32 im Querschnitt einen durch Zahnlücken ungeschwächten
bandförmigen zentralen Mittelbereich 42 auf, von dem die
Innenverzahnung 44 und die Außenverzahnung 46 zu beiden Seiten abstehen. Der zentrale Mittelbereich 42, die Innenverzahnung 44 und die Außenverzahnung 46 nehmen jeweils etwa
ein Drittel der Riemendicke ein.

Wie man in Fig. 4 erkennen kann, ist die Seitenwand 34 unterbrochen und kann sich auf einzelne nach oben ragende Halteteile reduzieren.

Die obere Stirnseite 48 des Zahnriemens 32 verläuft horizontal und ist im wesentlichen eben ausgebildet. Sie bildet
Teilabschnitte einer horizontalen geschlossenen Förderbahn 50,
welche dem Verlauf des Zahnriemens 32 folgt. Andere Abschnitte der Förderbahn 50 sind durch die oberhalb des Zahnriemens 32
verlaufenden halbkreisförmigen Bereiche auf den Bordscheiben 24
und 28 gegeben. Zur Überleitung sind ortsfest an der Seitenwand 34 befestigte Übergaberampen 52 neben der zugehörigen
Bordscheibe (in Fig. 1b neben der Bordscheibe 24) angeordnet.

Auf die Förderbahn 50 ist eine Vielzahl von Werkstückträgern 54

0054890

lose aufgesetzt. Diese weisen einen als zylindrische Flachscheibe ausgebildeten Sockelteil 56 und einen zentralen Fortsatz 58 auf, welcher aus einem zylindrischen Sockel 60 etwa
halben Durchmessers wie der Sockelteil 56 mit zur Zentrierung dienender Mantelfläche 62 und einem von dem Sockel 60
aufragenden zentralen Zentrierdorn 64 wiederum kleineren
Durchmessers nach oben fortgesetzt wird, der in einem konusähnlichen Endstück 66 mündet. Die Stufenfläche zwischen der
ringförmigen Oberseite des Sockelteils 56 und der zylindrischen Mantelfläche 62 des Sockels 60 für den Zentrierdorn 64
bildet die Werkstückaufnahme für eine an der Mantelfläche 62
zentrierte offene Kegelfeder, die als ein Beispiel eines
Werkstücks 68 dient. Die Basis der Kegelfeder ist hier oben
angeordnet, während ihr schmalerer Bereich an der Mantelfläche 62 zentriert ist. Zwischen der Kegelfeder und dem
Zentrierdorn ist ein ringförmiger zentraler Eingriffsbereich
für eine später noch zu beschreibende Zentriereinrichtung an
einer Werkstückabnahme ausgespart.

Je nach der Art des zu fördernden Werkstücks wird man die
Werkstückaufnahme verschieden anordnen. Man erkennt, daß
im vorliegenden Beispiel der Sockelteil 56 einerseits sowie
Sockel 60 und Zentrierdorn 64 andererseits jeweils etwa die
halbe Höhe des Werkstückträgers 54 ausmachen.

Der Sockelteil 56 ist auf der Förderbahn 50 in Achsrichtung
frei verschiebbar gelagert und wird lediglich reibschlüssig
bzw. durch reibschlüssig erzeugten Schub nachfolgender Werkstückträger 54 gefördert. Es werden für eine bestimmte Werkstückart gleichartige Werkstückträger vorgesehen, die jedoch bei zweckmäßig gleich- oder ähnlich bleibendem Sockelteil sich möglichst nur in der Ausbildung der Werkstückaufnahme unterscheiden.

Es wurde bereits erwähnt, daß der Zahnriemen 32 durch auflagernde Führungsrollen 40 mit Seitenführungsflächen führbar ist. Auch die meist, aber nicht zwingend zylindrischen Sockelteile 56
der Werkstückträger 54 werden zweckmäßig seitlich geführt,
und zwar hier durch ortsfeste innere seitliche Führungsleisten 70 und äußere Führungsleisten 72. Die äußeren Führungsleisten 72 können dabei als oberer ringförmiger Fortsatz
eines auf der Tischplatte 2 befestigten Führungshalbringes 74
ausgebildet sein. Die inneren Führungsleisten 70 sind zweckmäßig durch auf der anderen Seite der Zahnriemenscheibe von
der Tischplatte 2 aufragende Wandteile 78 ortsfest gehalten.
Der Führungshalbring 74 sowie die Wandteile 78 können zusammen mit einer an ihnen befestigten Deckplatte 79 die Antriebselemente für die Zahnriemenscheibe weitgehend kapseln.

Die Sockelteile 56 der Werkstückträger 54 stehen beträchtlich, im Beispiel um das Vier- bis Fünffache, über die obere
Stirnseite 48 des Zahnriemens 32 seitlich hervor.

Dementsprechend hat bereits die jeweils obere Bordscheibe 24
bzw. 28 einen größeren Radius als die zugehörige untere
Bordscheibe 30, die im wesentlichen nur als Sicherung des
Zahnriemens 32 gegen axiale Verschiebung dient und daher über
diesen nicht hervorsteht.

Andererseits ist die obere Bordscheibe 24 bzw. 28 nicht so
weit auskragend, daß sie den Sockelteil 56 des jeweiligen
Werkstückträgers 54 voll unterstützen kann. Vielmehr ist
eine den äußeren Rand der Sockelteile 56 knapp untergreifende Kippsicherungsfläche 80 einerseits an radial äußeren
unteren Führungsleisten 82 und andererseits an radial inneren unteren Führungsleisten 84 ausgebildet.

Ferner greifen von den Seitenwänden 34 aus radial äußere
Deckleisten 86 über den äußeren Rand des Sockelteils 56,
zu denen radial innere Deckleisten 88 korrespondieren, die
über den radial inneren Rand des jeweiligen Sockelteils 56
greifen. Die radial inneren Deckleisten 88 sind von den radial inneren Führungsleisten 70 getragen, die wiederum an
der Deckplatte 79 ausgebildet sind.

Die Kippsicherungsflächen 80, die seitlichen Führungsleisten 82 und 84 und die Deckleisten 86 und 88 bilden einen
Führungskanal für die Sockelteile 56 der Werkstückträger 54,
die in diesem Führungskanal bis auf gewisse, hier nicht
näher bezeichnete Bereiche mit Entnahmemöglichkeit unverlierbar gehalten sind. Dabei ist an der Oberseite dieses
Führungskanals zwischen den beiden Deckleisten 86 und 88
ein Ringschlitz 90 ausgespart, durch welchen die Werkstückaufnahme an den Werkstückträgern frei zugänglich ist.

Zur Nachspannung eines Zahnriemens ist anstelle von seitlichen Spannrollen, welche die Förderbahn in unerwünschter
Weise einbeulen würden und damit mit dem ortsfesten Führungskanal für die Werkstückträger nicht übereinstimmen würden,
zweckmäßig eine lineare Ausrückbarkeit der mit der Welle 26
verbundenen Zahnriemenscheibe sowie aller in diesem Bereich
vorhandener Führungselemente vorgesehen. Zu diesem Zweck
ist eine feststellbare Langlochführung 92 zwischen dem in
Fig. 1b rechten Bereich (einschließlich der Überführungsrampe 52) und dem linken Bereich der sonstigen Darstellung
in Fig. 1a und Fig. 1b vorgesehen. Durch entsprechende Überlappungen der Führungsflächen im Führungskanal kann man
trotz dieser Linearverstellung eine durchgehende Führung
der Werkstückträger 54 sicherstellen.

Zur Vermeidung von komplizierten Nachstellarbeiten kommt jede
Nachstelleinrichtung in Frage, welche die Erstreckungsrichtung linearer Bereiche des Führungskanals für die Werkstückträger nicht beeinträchtigt, sondern lediglich eine Linearverstellung in der Richtung des jeweiligen Führungskanals
vorsieht.

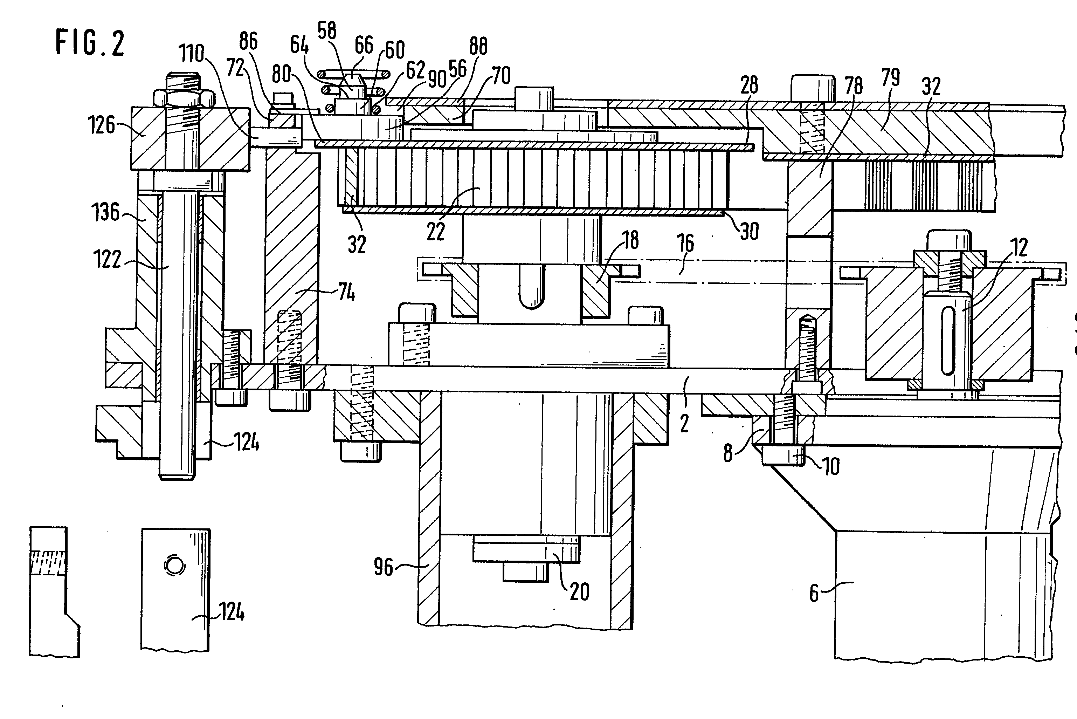

Zur Feststellung der Langlochführung 92 dienen Klemmschrauben 94, die von der Seite des Maschinengestelles her
wirksam sind. Bei der Längsverstellung in der Langlochführung 92 wird auch die zugehörige, normalerweise am Maschinengestell befestigte Bandhalterung 96 (vgl. Analogon
in Fig. 2) mit verstellt. Es versteht sich, daß die Werkstückträger 54 in ihrem Führungskanal mit etwas seitlichem
Spiel und Höhenspiel laufen.

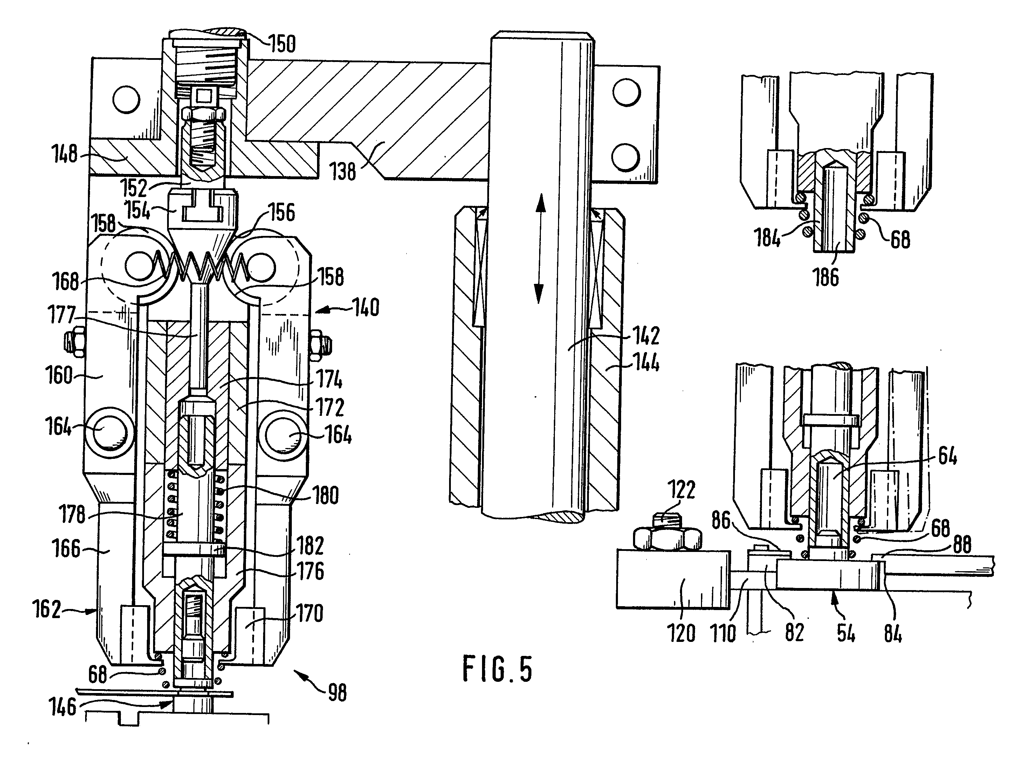

An einer in Fig. 5 detaillierter beschriebenen Werkstückabnahme 98 laufen die vom Zahnriemen 32 kontinuierlich in
Richtung des Pfeils 100 umlaufenden Werkstückträger 54 auf
einer Sperre 102 auf, welche eine Sperrklinke 104 bildet,
die fast bis zum Zentrum des Förderweges vor einen ankommenden Werkstückträger greift und an diesem mit einer Sperrfläche 106 formschlüssig an der äußeren Zylinderfläche des
Sockelteils 56 zur Anlage kommt. Dabei stauen sich vor der
Sperre 102 alle nachkommenden Werkstückträger 54 längs einer
Pufferstrecke 108, auf der in Fig. 1a beispielsweise fünf
aufeinander aufgelaufene Werkstückträger 54 dargestellt sind.

Es sei hier ohne Beschränkung der Allgemeinheit angenommen,
daß an der Werkstückaufnahme jeweils nur ein Werkstück aufgenommen wird.

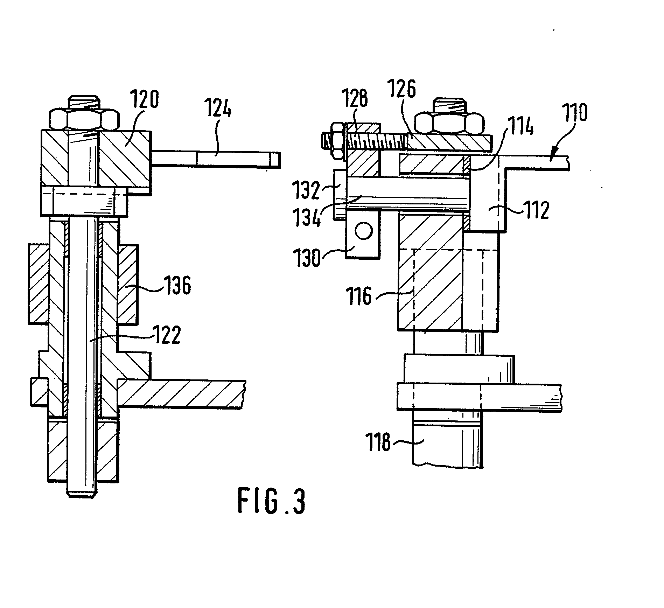

Wenn dies erfolgt ist, klappt die Sperre 102 in die in Fig. 1a
gestrichelt dargestellte ausgeschwenkte Stellung und gibt den
von ihr bis dahin gehaltenen Werkstückträger 54 zum Rücklauf
frei. Währenddessen wird der nächstfolgende Werkstückträger 54
von einer Nachrücksperre 110 (vgl. auch Fig. 3) am Nachrücken
gehindert. Wenn die vorderste Werkstückaufnahme der Pufferstrecke die Sperre 102 passiert hat, schließt diese wieder,
die Nachrücksperre 110 wird freigegeben und die nächste Werkstückaufnahme wird in Anlage an die Sperre 102 vorgeschoben,
worauf der Vorgang der Werkstückentnahme von neuem beginnen
kann. Die Sperre 102 und die Nachrücksperre 110 werden daher im Takt der Werkstückabnahme, aber im Gegentakt relativ zueinander betrieben.

Die Nachrücksperre 110 weist ein schieberförmiges Klemmteil 112 auf, welches ebenso wie die Sperre 102 mit der zylindrischen Außenfläche des Sockelteils 56 zusammenwirkt, aber auf diese lediglich radial von außen einklemmend aufdrückt. Hierzu ist der Klemmteil 112 normalerweise von einer Tellerfeder 114 in Richtung auf die Förderbahn 50 vorgespannt. In Fig. 3 ist der Zustand der Tellerfeder 114 gezeigt, in dem diese maximal komprimiert ist, um den Klemmteil 112 außer Eingriff mit der Förderbahn zu bringen.

Die Tellerfeder 114 ist rückseitig an einem Führungsblock 116 für das in ihm schieberartig bewegliche Klemmteil 112 abgestützt. Der Führungsblock 116 ist seinerseits auf einem Lagerzapfen 118 schwenkbar gelagert, so daß die Nachrücksperre 110 in ausgerückter Stellung die in Fig. 1a gestrichelte Stellung einnimmt.

Zur Betätigung von Sperre 102 und Nachrücksperre 110 im Gegentakt dient eine Wippe 120, die auf einer Schwenkwelle 122 befestigt ist und von dieser in einem begrenzten Winkelbereich im Takt hin und her schwenkbar ist. Die Wippe 120 ist doppelarmig ausgebildet. Ihr einer Arm 124 ist mit der Sperre 102 fest verbunden. Ihr anderer Arm 126 greift über eine Längeneinstellschraube 128 an einem Mitnahmeanschlag 130 an, der hinter ein Kopfstück 132 am aus dem Führungsblock 116 hinten herausragenden Ende 134 des schieberförmigen Klemmteils 112 greift.

Die Schwenkwelle 122 kann dabei von einem eigenen Antrieb oder von einer zentralen Steuerwelle der Maschine abgeleitet angetrieben sein. Die Schwenkwelle 122 ist in einem mit der Tischplatte 2 starr verbundenen Lagerteil 136 gelagert.

In der der Sperre 102 und der Nachrücksperre 110 zugeordneten Werkstückabnahme 98 (Fig. 5) ist ein Träger 138 für eine achszentrierte Greifzange 140 an einer im Takt vertikal auf und ab bewegbaren Antriebswelle 142 befestigt, die in einem ortsfesten Lagerteil 144 entsprechend dem in Fig. 5 dargestellten Doppelpfeil axial verschiebbar und überdies so verschwenkbar ist, daß die Greifzange 140 einmal auf das vor der Sperre 102 anstehende Werkstück 68 (Position Z in Eingriff und Position Y abgehoben), und das andere Mal auf eine Werkstückaufnahme 146 einer weiterführenden Station axial fluchtend ausgerichtet ist. Während die Schwenkbewegung die Überführung des Werkstücks 68 bewirkt, bewirkt die Hubbewegung das Abheben des Werkstücks und dessen anschließendes Wiederabsetzen.

Der Träger 138 trägt den Grundkörper 148 der Greifzange 140, der seinerseits drehbar im Träger 138 gelagert ist.

Ein pneumatischer Betätigungszylinder 150 für die Greifzange 140 ist an ein zylindrisches Verbindungsstück 152 angeschlossen, das seinerseits formschlüssig mit dem Kopfteil 154 eines konischen Betätigungselementes 156 verbunden ist. Dieses greift mit seiner konischen Außenfläche zwischen zwei als Kugellager ausgebildete und äquidistant zur Achse der Greifzange 140 gegensinnig verschiebbare Stellrollen 158, die ihrerseits in den oberen Armen 160 der doppelarmig ausgebildeten beiden Greifbacken 162 der Greifzange 140 gelagert sind. Die Greifbacken 162 sind ihrerseits auf Zapfen 164 im Grundkörper 148 der Greifzange 140 schwenkbar gelagert und bilden mit ihren unteren Armen 166 die Zangenbacken. Diese sind normalerweise durch eine zwischen den oberen Armen 160 gespannte Zugfeder 168 in Eingriffstellung vorgespannt, aber bei Beaufschlagung des konischen Betätigungselementes 156 mit Druckluft des Betätigungszylinders 150 infolge Abwärtsbewegung der konischen Steuerfläche des Betätigungselementes spreizbar.

An der Stirnseite der die Zangenbacken bildenden unteren Arme 166 der Greifbacken 162 ist ein auswechselbares Greiffutter 170 befestigt, das jeweils der Form des zu greifenden Werkstücks, hier wiederum der konischen offenen Feder, angepaßt ist.

Am Grundkörper 148 ist ein hülsenförmiger Träger 172 für eine darin angeordnete Messingführung 174 für einen axialen unteren Fortsatz 177 des Betätigungselementes 156 angeordnet. Der Träger 172 ist nach unten von einer hülsenförmigen Führung 176 für einen zwischen den Greifbacken 162 koaxial mit der Greifzange 140 höhenverstellbaren Zentrierstößel 178 fortgesetzt. Der Zentrierstößel 178 ist normalerweise von einer Druckfeder 180 in die in Position Y gezeigte, aus dem Greiffutter 170 herausragende Stellung vorgespannt. Die Druckfeder 180 ist dabei zwischen einem Bund 182 des Zentrierstößels und der Stirnseite der Messingführung 174 eingespannt. Bei von der Greifzange aufgenommenem Werkstück ist dieses also gemäß Position Y an der Mantelfläche 184 des Zentrierstößels zentriert.

Darüber hinaus ist das Mundstück des Zentrierstößels mit einer zylindrischen Ausnehmung 186 versehen. Das Mundstück des Zentrierstößels 178 ist dabei so bemessen, daß die Innenfläche der Ausnehmung 186 formschlüssig gemäß Position Z auf den Zentrierdorn 64 eines Werkstückträgers paßt, das Mundstück auf der oberen Ringschulter des den Zentrierdorn 64 tragenden Sockels 60 zur Auflage kommt und ferner daß die zylindrische äußere Mantelfläche 184 am Zentrierstößel mit der zylindrischen Mantelfläche 62 am Sockel 60 des Werkstückträgers 54 fluchtet. Dadurch kann man eine glatte zentrierte Übernahme des mit einer zentrischen Ausnehmung versehenen Werkstücks, hier der konischen Feder, vom Werkstückträger 54 in die Greifzange 140 gewährleisten.

Der Einfachheit halber ist nur eine einzige Station, hier als Werkstückentnahme, im einzelnen beschrieben. Es kann jedoch eine beliebige Anzahl von Arbeitsstationen, d.h. Fertigungs- bzw. Bearbeitungsstationen einerseits und Montagestation andererseits, sowie von Kontrollstationen und/oder Übergabestationen im Vor- oder Rücklauf der Förderbahn vorgesehen sein.

Ebenso kann die Bestückung der leeren Werkstückträger wahlweise im Vorlauf oder im Rücklauf erfolgen. Bedarfsweise kann man dabei einen Werkstückträger oder eine Mehrzahl von diesen an bestimmten Stellen mittels der vorzugsweise pneumatisch oder mechanisch betätigten jeweiligen Sperre anhalten, so daß dort die jeweilige Arbeitsstation, gegebenenfalls gesondert zentriert, tätig werden kann.

Auch kann die Anzahl der auf der Förderbahn eingesetzten Werkstückträger je nach Verwendungszweck beliebig variiert werden. Umso mehr Werkstückträger bei gleicher Förderbahnlänge eingesetzt werden, umso länger werden jeweils die Pufferstrecken.

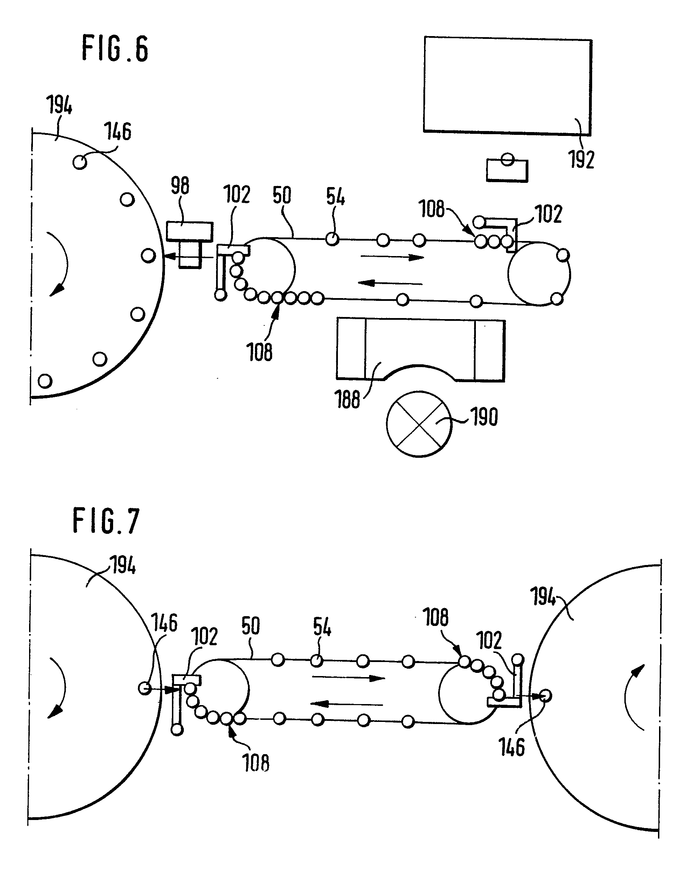

Die Fig. 6 bis 8 veranschaulichen nun die einleitend besonders hervorgehobenen vier Anwendungsmöglichkeiten eines erfindungsgemäßen Werkstückförderers, zunächst bei unverändertem Weg der Förderbahn im Vergleich mit Fig. 1a und 1b.

So veranschaulicht Fig. 6 zunächst die beiden erstgenannten Möglichkeiten 1. und 2., nämlich entweder eine langgestreckte Handeinlegeplatte 188 längs eines geraden Trums der Förderbahn 50 für eine Bedienungsperson 190 vorzusehen oder an irgendeiner Stelle der Förderbahn 50 einen Werkstückfertiger 192 anzuordnen, dem eine Sperre 102 zugeordnet ist, die vor der Sperre eine Pufferstrecke 108 für Werkstückträger 54 aufbaut und so ein taktgemäßes Einlegen der gefertigten Werkstücke auf den anstehenden Werkstückaufnahmen 54 ermöglicht.

In beiden Fällen erfolgt die Werkstückabnahme wiederum an einer Sperre 102, die ihrerseits eine Pufferstrecke 108 von Werkstücken aufstaut, hier im Gegensatz zum erstgenannten Fall, wo dies nicht unbedingt erforderlich ist, mit Bereitstellung des Werkstückträgers 54 auf einer oberen Bordscheibe 24 (der angetriebenen Zahnriemenscheibe 22) oder 30 (der nicht angetriebenen Zahnriemenscheibe). Eine Werkstückabnahme 98 übernimmt hier das Werkstück selbsttätig im Takt und überführt es auf eine Werkstückaufnahme 146 am Schaltteller 194 einer im Rundtakt betriebenen Schalttellermaschine. Die Pfeile geben den Betriebsablauf wieder.

Wenn eine Nachstellung der Zahnspannung erforderlich wird, wird zweckmäßig allgemein eine nicht angetriebene Zahnriemenscheibe in Richtung eines Linearabschnitts des Förderweges 50 verschoben.

Fig. 7 veranschaulicht die eingangs geschilderte dritte Anordnungsmöglichkeit als reines Verkettungsglied zwischen zwei mit Gegendrehsinn im Takt umlaufenden Schalttellern 194 von Schalttellermaschinen.An den Übergabestellen sind wiederum je eine Sperre 102 und eine Pufferstrecke 108 des kontinuierlich in Pfeilrichtung angetriebenen Werkstückförderers vorgesehen.

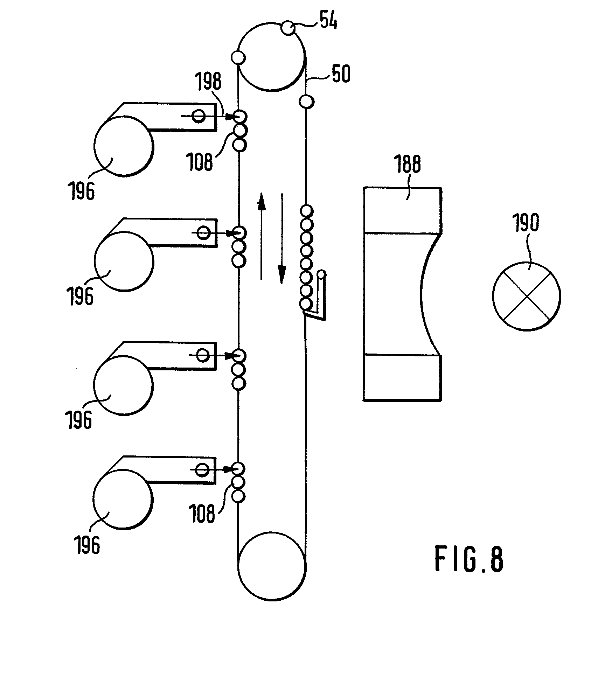

Fig. 8 veranschaulicht die eingangs genannte vierte Möglichkeit, den erfindungsgemäßen Werkstückträger selbst bei kontinuierlichem Antrieb des Endlosriemens längs des Förderweges taktgebunden an einer Vielzahl längs des Förderweges verteilter Arbeitsstationen zu benutzen und so eine Schalttellermaschine gemäß den vorhergehenden Beispielen von Fig. 6 oder 7 unmittelbar zu ersetzen, und zwar unter raumgünstigerer Konfiguration des Förderweges und damit auch der Anordnung der Stationen.

Rein beispielsweise sind an einem linearen Trum des Förderweges 50 wie in Fig. 6 ein langgestreckter Handeinlegeplatz 188

0054890

für eine Bedienungsperson 190, am gegenüberliegenden anderen langgestreckten Trum mehrere, hier ohne Beschränkung der Allgemeinheit vier, Arbeitsstationen 196 verteilt, denen in durch die jeweilige Pufferstrecke 108 variierbaren Abständen jeweils (hier nicht dargestellte) Sperren 102 zugeordnet sind, so daß jeweils ein entsprechend dem Pfeil 198 zentriertes Einwirken auf das auf einem Werkstückträger 54 ankommende Werkstück möglich ist, ohne daß das fördernde Element, im Beispiel der Endlosriemen, taktgebunden angetrieben sein muß.

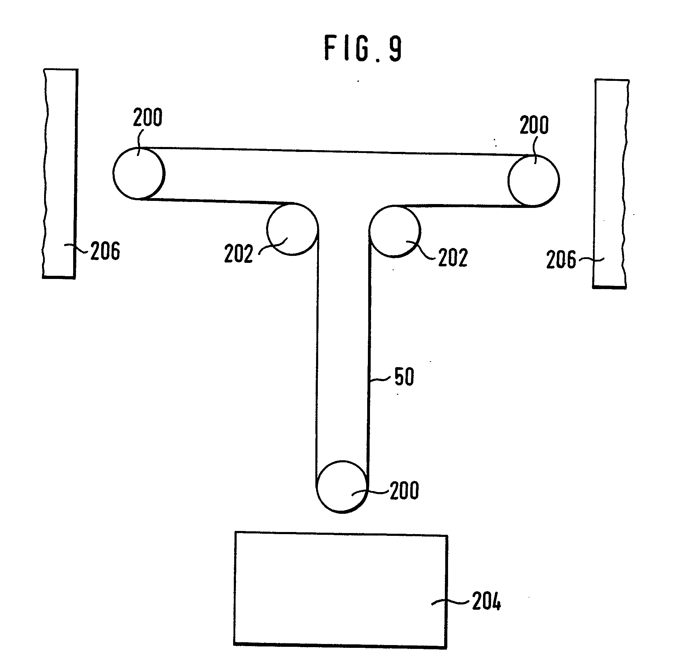

Fig. 9 schließlich gibt ein einziges unter einer Vielzahl möglicher Beispiele für eine abweichende Gestalt des Förderweges, hier mit drei jeweils um 180° umlenkenden Riemenscheiben 200 und zwei jeweils nur um 90° umlenkenden Riemenscheiben 202, von denen nur eine angetrieben zu sein braucht.

Der Förderweg läuft hier etwa längs eines T. Der obere Balken des T hat dabei im wesentlichen dieselbe Förderwegkonfiguration wie schon im Fall aller vorhergehenden Ausführungsbeispiele. Der Stiel des T zeigt jedoch die Möglichkeit, mit demselben Förderer auch weiter entfernte Stationen 204 zu erreichen, beispielsweise einen Werkstückfertigungsautomaten. Die weiteren Stationen 206 können beliebiger Art sein, seien es Arbeitsstationen, Einlegestationen, Montagestationen, Kontrollstationen oder Werkstückentnahmestationen. Selbstverständlich kann man auch, wie früher geschildert, die Zahl der Stationen bei den unterschiedlichen Konfigurationen variieren. Wenn man mehrere Stiele eines T nebeneinanderschaltet, erhält man beispielsweise auch eine mäanderförmige Konfiguration des Förderweges, was bei angestrebter großer Flächendichte der Stationen sinnvoll sein kann. Ebenso kann man auch, anders als in Fig. 9, den Förderweg von Hin- und Rücklauf bzw. von Hin- und Weiterlauf weit auseinanderziehen, etwa derart, daß die Riemenscheiben 202 wegfallen und der Förderweg allein über die Riemenscheiben 200 verläuft.

**ELISABETH JUNG** DR. PHIL., DIPL.-CHEM.
**JÜRGEN SCHIRDEWAHN** DR. RER. NAT., DIPL.-PHYS.
**GERHARD SCHMITT-NILSON** DR.-ING.
**GERHARD B. HAGEN** DR. PHIL.
**PETER HIRSCH** DIPL.-ING.

PATENTANWÄLTE
EUROPEAN PATENT ATTORNEYS

8000 MÜNCHEN 40,
P. O. BOX 40 14 68
CLEMENSSTRASSE 30
TELEFON: (089) 34 50 67
TELEGRAMM/CABLE: INVENT MÜNCHEN
TELEX: 5-29 686

0054890

Q 857 M1

SORTIMAT Creuz & Co. GmbH
D-7057 Winnenden (Württ.)

15. Dez. 1981

---

A n s p r ü c h e

1.    Werkstückförderer zur Kopplung an mindestens eine taktabhängig betreibbare, mit dem Werkstück zusammenwirkende
Station, mit einem als Zahnriemen ausgebildeten antreibbaren
Endlosriemen, der hochkant gestellt um vertikale Umlenkachsen geführt ist und dessen Oberseite eine sich horizontal
erstreckende Förderbahn für eine Vielzahl von Werkstücken
bildet, dadurch g e k e n n z e i c h n e t ,
daß der Endlosriemen (32) kontinuierlich antreibbar ist,
daß die Oberseite des Endlosriemens als Gleitfläche für die
Werkstücke oder lose auf ihr aufgesetzte Werkstückträger (54)
derart ausgebildet ist, daß die Werkstücke oder Werkstückträger in Richtung der Förderbahn (50) relativ zum Endlosriemen (32) verschiebbar sind,
und daß im Einwirkungsbereich einer Station eine taktabhängig öffenbare Sperre (102) für den Weitertransport der
an der Sperre auflaufenden Werkstücke oder Werkstückträger
angeordnet ist.

2.    Werkstückförderer nach Anspruch 1, gekennzeichnet durch
ortsfeste Seitenführungen (70, 72) für die Werkstücke oder
Werkstückträger (54).

3.    Werkstückförderer nach Anspruch 1 oder 2, gekennzeichnet durch eine ortsfeste Höhenführung (86,88) für die Werkstücke oder Werkstückträger (54), die die Werkstücke oder Werkstückträger unter Freilassung ihrer Werkstückaufnahmen
wenigstens über einen Teilbereich der Förderbahn (50) unverlierbar am Endlosriemen (32) hält.

4. Werkstückförderer nach einem der Ansprüche 1 bis 3,
dadurch gekennzeichnet, daß die Werkstücke oder Werkstückträger (54) eine größere Breite als die die Förderbahn (50)
bildende Seite (48) des Endlosriemens (32) haben.

5. Werkstückförderer nach Anspruch 4, gekennzeichnet durch
eine die überstehenden Ränder der Werkstücke oder Werkstückträger (54) knapp untergreifende ortsfeste Kippsicherungsfläche (80).

6. Werkstückförderer nach einem der Ansprüche 1 bis 5,
dadurch gekennzeichnet, daß die Werkstückträger (54) einen
zylindrischen Sockelteil (56) aufweisen.

7. Werkstückförderer nach einem der Ansprüche 1 bis 6,
dadurch gekennzeichnet, daß die Werkstückträger (54) einen
zentralen, mit einer Werkstückabnahme (98) an mindestens
einer Station zusammenwirkenden Zentrierdorn (64) aufweisen.

8. Werkstückförderer nach einem der Ansprüche 1 bis 7,
dadurch gekennzeichnet, daß die Werkstückträger (54) eine mit
dem Werkstück (68) zusammenwirkende Zentrierfläche (62) aufweisen.

9. Werkstückförderer nach den Ansprüchen 7 und 8, dadurch gekennzeichnet, daß die Zentrierfläche (62) an einem Sockel (60)
des Zentrierdorns (64) ausgebildet ist.

10. Werkstückförderer nach einem der Ansprüche 1 bis 9,
dadurch gekennzeichnet, daß im Bereich mindestens
einer Station eine Umlenkrolle (22) oder Führungsrolle für den Endlosriemen (32) vorgesehen ist,

0054890

daß die Umlenk- oder Führungsrolle mindestens mit einer oberen, die Förderbahn ergänzenden Bordscheibe (28) versehen ist, und daß im Bereich des Randes der Bordscheibe eine Übergaberampe (52) zur Überführung von Werkstückträgern (54) vom Endlosriemen auf die Bordscheibe und/oder von der Bordscheibe auf den Endlosriemen angeordnet ist.

11. Werkstückförderer nach Anspruch 10, dadurch gekennzeichnet, daß die Übergaberampe (52) ortsfest neben der Bordscheibe (28) ausgebildet ist.

12. Werkstückförderer nach einem der Ansprüche 1 bis 11, gekennzeichnet durch eine in Richtung der Förderbahn (50) hinter der Sperre (102) angeordnete und im Gegentakt zur Sperre betätigbare Nachrücksperre (110).

13. Werkstückförderer nach Anspruch 12, gekennzeichnet durch einen gemeinsamen Antrieb (122) von Sperre (102) und Nachrücksperre (110).

14. Werkstückförderer nach Anspruch 13, dadurch gekennzeichnet, daß die Sperre (102) als ein zwischen aufeinanderfolgende Werkstückträger (54) greifender Sperrhaken (Sperrklinke 104) ausgebildet ist, der starr an einem Ende eines Armes (124) einer hin und her bewegbaren zweiarmigen Wippe (120) ausgebildet ist, deren anderer Arm (126) zum Außereingriffbringen der normalerweise in Sperrstellung befindlichen Nachrücksperre (110) vorgesehen ist.

15. Werkstückförderer nach Anspruch 13 oder 14, dadurch gekennzeichnet, daß die Nachrücksperre (110) ein mit einem Sockelteil (56) des jeweiligen Werkstückträgers (54) zusammenwirkendes Klemmteil (112) aufweist.

16. Werkstückförderer nach einem der Ansprüche 1 bis 15, dadurch gekennzeichnet, daß die Sperre (102) an ein Sockelteil (56) des jeweiligen Werkstückträgers (54) formschlüssig angepaßt (106) ist.

17. Werkstückförderer nach einem der Ansprüche 1 bis 16, dadurch gekennzeichnet, daß ein an einer Station vorgesehenes Wirkelement (Greifzange 140) mit einer Zentriereinrichtung (178) für den zur Einwirkung bereitstehenden Werkstückträger (54) versehen ist.

18. Werkstückförderer nach Anspruch 17, dadurch gekennzeichnet, daß eine Werkstückabnahme (98) als zentrierte Greifzange (140) ausgebildet ist.

19. Werkstückförderer nach Anspruch 18, dadurch gekennzeichnet, daß die Greifzange (140) einen zwischen ihren Greifbacken (162) höhenbeweglichen Zentrierstößel (178) aufweist.

20. Werkstückförderer nach einem der Ansprüche 1 bis 19, dadurch gekennzeichnet, daß dem Endlosriemen (32) zwischen Umlenk- oder Führungsrollen seitliche und/oder untere Führungs- und Stützeinrichtungen (40) zugeordnet sind.

21. Werkstückförderer nach Anspruch 20, gekennzeichnet durch seitliche Führungs- und Stützrollen.

22. Werkstückförderer nach Anspruch 20 oder 21, gekennzeichnet durch den Endlosriemen (32) unterstützende kugelgelagerte Stütz- und Führungsrollen (40).

23. Werkstückförderer nach einem der Ansprüche 1 bis 22, gekennzeichnet durch eine den Endlosriemen um 180° umlenkende, vorzugsweise frei mitlaufende Umlenkrolle, die zusammen mit Führungen (70,72,80,86,88) für die Werkstückträger (54) in Richtung von Ein- und Auslauf der Förderbahn (50) verstellbar (92,94) ist (Fig. 1b).

24. Werkstückförderer nach einem der Ansprüche 1 bis 23, dadurch gekennzeichnet, daß der Endlosriemen zwischen zwei ihn jeweils um 180° umlenkenden Umlenkrollen (200) verläuft.

0054890

25. Werkstückförderer nach einem der Ansprüche 1 bis 24, dadurch gekennzeichnet, daß der Endlosriemen über eine Vielzahl von Umlenkrollen (200,202) geführt ist.

26. Werkstückförderer nach einem der Ansprüche 1 bis 25, gekennzeichnet durch Anordnung an einer Station (188) zum Handeinlegen von Werkstücken.

27. Werkstückförderer nach einem der Ansprüche 1 bis 26, gekennzeichnet durch Anordnung an einer Werkstückfertigungsstation (192).

28. Werkstückförderer nach einem der Ansprüche 1 bis 27, gekennzeichnet durch Anordnung als Verkettung zwischen zwei Fertigungs- und/oder Montageautomaten (Fig. 7).

29. Werkstückförderer nach einem der Ansprüche 1 bis 28 in Anordnung als der Werkstückförderer eines Fertigungs- und/oder Montageautomaten (Fig. 8).

FIG.1A

1/9

0054890

FIG.1B

0054890

FIG.2

3/9

00054890

FIG.3

FIG.4A

FIG.4

FIG.5

FIG.6

FIG.7

0054890

FIG.8

0054890

# FIG.9

**Europäisches Patentamt**

**EUROPÄISCHER RECHERCHENBERICHT**

0054890

Nummer der Anmeldung

EP 81 11 0460

| EINSCHLÄGIGE DOKUMENTE | | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| X | US - A - 2 740 515 (WILSON) . <br><br> * Spalte 3, Zeilen 9-15; Spalte 3, Zeilen 25-31; Spalte 3, Zeile 75; Spalte 4, Zeilen 1-3; Spalte 4, Zeilen 37-68; Spalte 5, Zeilen 25-27; Spalte 6, Zeilen 24-32; Figuren 1,5 * <br><br> -- | 1,2,4, 5,20, 21,24, 25,28 | B 23 Q 7/14 <br> B 65 G 37/02 <br> 15/06 <br> 19/02 |
| X | US - A - 3 092 237 (WAYS) <br><br> * Spalte 3, Zeilen 3-25; Spalte 2, Zeilen 35-39; Figuren 1-3 * <br><br> -- | 1-3,6 | |
| A | DE - A - 1 756 438 (BOSCH) <br><br> * Seite 4, Zeilen 16-28; Seite 5, Zeilen 1-15; Figuren 1,2 * <br><br> -- | 1,2,6, 7,12-15 | **RECHERCHIERTE SACHGEBIETE (Int Cl.³)** <br><br> B 65 G <br> B 23 Q <br> H 05 K <br> G 04 D |
| A | DE - A - 2 752 268 (SCHLEFFER) <br><br> * Seite 9, Zeilen 1-38; Seite 10, Zeilen 1-29; Seite 11, Zeilen 19-28; Figur 2 * <br><br> -- | 1-3,6-9 | |
| A | DE - C - 315 205 (HANNAK) <br><br> * Insgesamt * <br><br> -- | 10 | |
| D A | US - A - 2 823 789 (HENNING) <br><br> ----- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-03-1982 | OSTIJN |

EPA form 1503.1   06.78